(19) **Europäisches Patentamt**
**European Patent Office**
**Office européen des brevets**

(11) **EP 1 909 519 A1**

(12) **EUROPEAN PATENT APPLICATION**
published in accordance with Art. 153(4) EPC

(43) Date of publication:
**09.04.2008 Bulletin 2008/15**

(51) Int Cl.:
***H04Q 7/38*** *(2006.01)*

(21) Application number: **05780522.8**

(22) Date of filing: **22.08.2005**

(86) International application number:
**PCT/JP2005/015225**

(87) International publication number:
**WO 2007/023519 (01.03.2007 Gazette 2007/09)**

(84) Designated Contracting States:
**DE FR GB**

(71) Applicant: **MATSUSHITA ELECTRIC INDUSTRIAL CO., LTD.**
**Osaka 571-8501 (JP)**

(72) Inventor: **XU, Ming,**
**Matsushita Electric Industrial Co., Ltd.**
**2-1-61,Shiromi, Chuo-ku,**
**Osaka 540-6207 (JP)**

(74) Representative: **Zimmer, Franz-Josef**
**Grünecker, Kinkeldey,**
**Stockmair & Schwanhäusser**
**Anwaltssozietät**
**Maximilianstrasse 58**
**80538 München (DE)**

(54) **WIRELESS NETWORK CONTROL APPARATUS, COMMUNICATION SYSTEM AND COMMUNICATION METHOD**

(57)     A wireless network control apparatus capable of transmitting an acknowledgement of receipt at an earlier timing, thereby suppressing any delay that would otherwise be caused by a retransmission. In this apparatus, a reading part (102) reads an RRC connection request message. A transmission control part (103) controls an ACK generating part (105) such that an ACK message generated by the ACK generating part (105) is transmitted first, while controlling a message creating part (104) such that an RRC connection establishment message generated by the message creating part (104) is transmitted in succession to the ACK message. The message creating part (104) creates the RRC connection establishment message that includes an information element serving as information for establishing an RRC connection. The ACK generating part (105) creates the ACK message of one block including the information element.

PRIOR ART

FIG.1

Printed by Jouve, 75001 PARIS (FR)

**Description**

Technical Field

The present invention relates to a radio network controlling apparatus, communication system and communication method for executing, particularly, radio resource control procedure (hereinafter "RRC").

Background Art

Communication connection delay in a mobile communication system is a significant factor for judging service quality. In this case, "communication connection delay" refers to a delay period between the time a user starts speech or data service and the time the user is able to receive speech or data service. Following the introduction of high-speed techniques such as HSDPA (High Speed Downlink Packet Access) and HSUPA (High Speed Uplink Packet Access) in third generation mobile communication systems, delay that occurs upon communication connection occupies the substantial weight among communication delay experienced by users. To improve communication connection delay of third generation mobile telephones, WG2 of 3GPP RAN (standards organization) has been analyzing main factors causing communication connection delay in existing systems since March 2005 and discussing improvement methods (see, for example, Non-Patent Document 1).

In UMTS (Universal Mobile Telecommunications System), the communication connection procedure between a terminal and a network is formed with connection procedures between nodes of a terminal, base station, a radio network controlling apparatus (RNC) and a core network (CN). The time for transmitting signaling messages between nodes is the most significant factor of delay. An example of actual measurement values of delay time in the procedure for speech communication connection (circuit-switchedcallsetup) in UMTS is shown, for example, in Non-Patent Document 2. According to this analysis result, speech communication connection delay results primarily from delay in the RRC connection procedure for radio communication, the initial signaling procedure including terminal authentication between a terminal and a core network, and the bearer connection procedure for transmitting speech of users. The communication connection procedure (PS call setup) for packet data differs a little from the speech communication connection procedure, but the component of delay is basically the same.

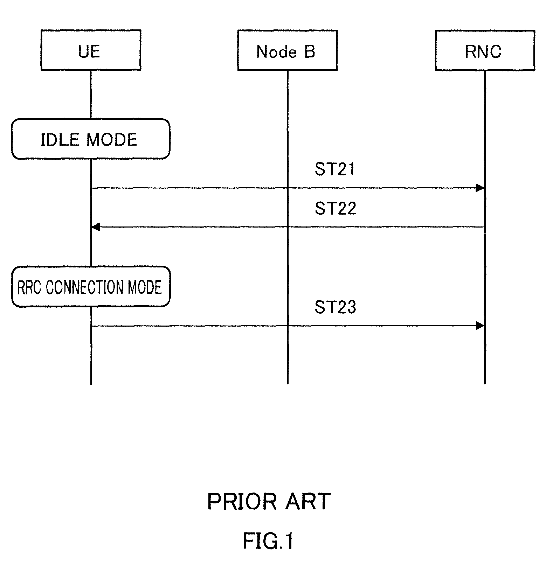

Next, the RRC connection procedure will be described with reference to FIG.1 in the case where a terminal uses the common channel in the transport channel. FIG.1 is a sequence diagram showing the RRC connection procedure in the case where a terminal uses the common channel in the transport channel.

In UMTS, after power is turned on, a terminal enters idle mode after network (PLMN) search and cell search. When the terminal in idle mode receives paging information or makes a call, the terminal starts the connection procedure. The RRC connection procedure is formed with transmission and reception of three signaling messages between a terminal and a radio network controlling apparatus.

First, the terminal transmits an RRC connection request message in TM (Transparent Mode) through the common control channel (hereinafter "CCCH") (i.e. random access channel (hereinafter "RACH") and starts the RRC connection setup procedure (step ST21). Next, the radio network controlling apparatus returns the RRC connection setup message in UM (Unacknowledged Mode) to the terminal through CCCH (i.e. forward access channel (hereinafter "FACH")) (stepST22). After receiving the RRC connection setup message, the terminal sets layer 1 and layer 2 using parameters included in the RRC connection setup message, and establishes a dedicated control channel (hereinafter "DCCH"). According to the command of the network, when using the common channel in the transport channel, the terminal enters the CELL_FACH state in RRC connected mode. Next, after the terminal enters RRC connected mode, the terminal transmits a RRC connection setup complete message in AM (Acknowledged Mode) to the radio network controlling apparatus through DCCH (step ST22) and finishes the RRC connection setup procedure.

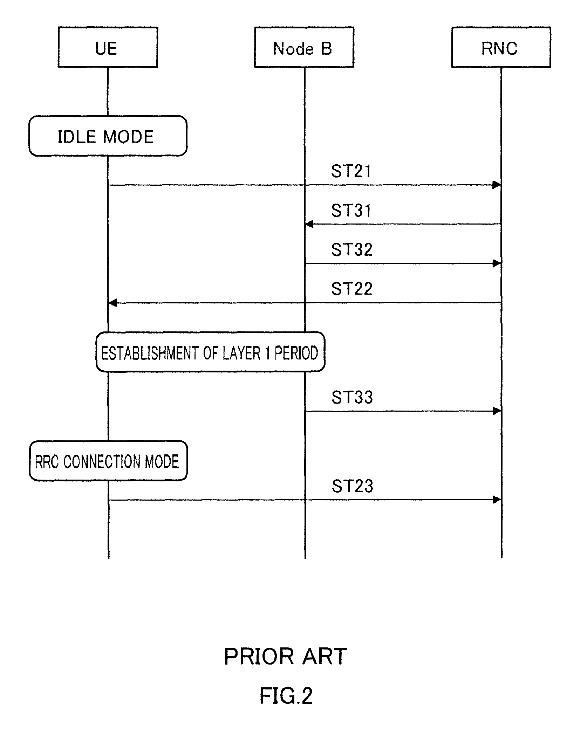

Next, the RRC connection procedure will be described with reference to FIG.2 in the case where the terminal uses the dedicated channel in the transport channel. FIG.2 is a sequence diagram showing the RRC connection procedure in the case where the terminal uses the dedicated channel in the transport channel. In this case, in FIG.2, the same procedure as in FIG.1 will be assigned the same reference numerals and overlapping descriptions will be omitted.

After receiving an RRC connection request message, the radio network controlling apparatus transmits a radio link setup request to establish a dedicated channel between the radio network controlling apparatus and the base station apparatus (step ST31), and the base station apparatus returns a radio link setup response (step ST32) . After receiving the RRC connection setup message, the terminal sets layer 1 and layer 2 using parameters included in the RRC connection setup message and establishes DCCH. Then, synchronization of layer 1 is established between the terminal and the base station apparatus. Next, the base station apparatus transmits a radio link restore indication to the radio network controlling apparatus (step ST33).

In the above RRC connection procedure, when the terminal is in a poor environment where radio wave coverage is not good such as cell edges, cases occur where the radio network controlling apparatus cannot receive the RRC connection request message. In this case, the terminal retransmits the RRC connection request message. The RRC connection request message is transmitted in transparent mode of RLC (Radio Link Control), and the terminal does not have a function of checking the received result in layer 2 and carrying out retransmission automatically. Consequently, the RRC connection request message is retransmitted in layer 3. The retransmission messages are transmitted through lower layers, and retransmission in layer 3 provides greater retransmission delay than retransmission in layer 2.

According to 3GPP standards, time intervals for retransmission of the RRC connection request message and the number of retransmissions are defined by T300, the timer value of N300 and the constant. As the default values, T300 is one second and N300 is three times. As a result, retransmission of the RRC connection request message from the terminal results in retransmission delay of several seconds where reception is weak. Further, when the message is retransmitted, communication connection delay becomes two times or more compared to the case where the message is not retransmitted.

According to 3GPP standards, a plurality of values between 100 ms and 8000 ms are defined as values of T300 using a table. In the network, T300 is set using values of the table. In this case, to reduce retransmission delay of the RRC connection setup request message, T300 is set with small values. By setting T300 with small values, the RRC connection setup request message is transmitted a plurality of times in short time intervals.

However, when the terminal is in a good environment where radio wave coverage is good, the RRC connection setup request message is not likely to be retransmitted. In this case, by setting T300 with smaller values than the time interval between transmission of the RRC connection setup request and reception of RRC connection setup, even when retransmission is not necessary, the terminal retransmits the RRC connection request message, and so there is a problem that power of the terminal is wasted.

In current UMTS, to prevent wasteful transmission power consumption of the terminal, the setting value of T300 is set taking into account the time interval between start of transmission of the RRC connection setup request message and the end of reception of the RRC connection setup message.

To prevent wasteful transmission power consumption of the terminal, RRC Connection Request message (from Idle to CELL_DCH) retransmission time interval T is set to satisfy equation 1.
[1]

$$T >= t0 + t1 + t2…(Equation\ 1)$$

where t0 is the transmission time for the RRC connection request message, t1 is the time required for the radio link setup procedure and t2 is the transmission time for the RRC connection setup message.

Dependign on the size of the message, t2 becomes seven times length of t0. Further, the setting value of T300, that is, the majority that occupies retransmission delay, is t1 (only CELL_DCH) and t2.

Non-Patent Document 1: "Signaling Enhancement for Circuit-Switched (CS) and Packet-Switched (PS) Connections; Analysis and Recommendations," 3GPP TR 25.815 V.0.2.1.

Non-Patent Document 2: "Evaluating and Refining Call Setup Delay", 5th international Conference on 3G Mobile Communication Technologies, 18-20 Oct. 2004. Chris Johoson et. al (Nokia) and Chris Haines (3).

Disclosure of Invention

Problems to be Solved by the Invention

However, a conventional apparatus sets the value of T300 by taking into account the time interval between start of transmission of the RRC connection setup request message and end of reception of the RRC connection setup message, a conventional apparatus sets the value of T300, and so there is a problem that reducing the value of T300 is limited and delay caused by retransmission cannot be made shorter.

It is therefore an object of the present invention to provide a radio network controlling apparatus and retransmission method that make it possible to reduce delay caused by retransmission by returning reception acknowledgment at an early timing.

Means for Solving the Problem

The radio network controlling apparatus according to the present invention adopts a configuration including: a receiving section that receives a connection request message for requesting to set up radio resource control connection for radio communication; a reading section that reads the received connection request message; a message generating section that generates a message showing successful reception when the connection request message is read accurately and that generates a connection setup message for setting up the radio resource control connection; and a transmission controlling section that transmits the connection setup message after transmitting the message showing successful reception.

The communication system according to the present invention that executes a procedure of setting up radio resource control communication in radio communication at a communication terminal apparatus and a radio network controlling apparatus, adopts a configuration in which when a message showing successful reception of a connection request message for requesting to set up the transmitted radio resource control connection is not received, the communication terminal apparatus retransmits the connection request message and sets radio resource control connection based on connection information, included in a received connection setup message, for setting up radio resource control connection; and when the received connection request message is read accurately, the radio network controlling apparatus transmits the message showing successful reception and a connection setup message including the connection information after transmitting the message showing successful reception.

The communication method according to the present invention for executing a procedure of setting up radio resource control connection for radio communication at a communication terminal apparatus and a radio network controlling apparatus, includes: at the communication terminal apparatus, transmitting a connection request message for requesting to set up the radio resource control connection; receiving the connection request message at the radio network controlling apparatus; when the received connection request message is read accurately, generating a message showing successful reception and a connection setup message including connection information for setting up the radio resource control connection; transmitting the connection setup message after the radio network controlling apparatus transmits the message showing successful reception; and when the connection setup message is received at the communication terminal apparatus, setting up radio resource control connection based on the connection information, and, when the message showing successful reception is not received at the communication terminal apparatus in a predetermined time, retransmitting the connection request message.

Advantageous Effect of the Invention

According to the present invention, it is possible to reduce delay caused by retransmission by returning reception acknowledgement at an early timing.

Brief Description of Drawings

FIG.1 is a sequence diagram showing the conventional RRC connection procedure;
FIG.2 is a sequence diagram showing the conventional RRC connection procedure;
FIG.3 is a block diagram showing a configuration of a radio network controlling apparatus according to Embodiment 1 of the present invention;
FIG.4 is a sequence diagram showing the RRC connection procedure according to Embodiment 1 of the present invention;
FIG.5 is a sequence diagram showing the RRC connection procedure according to Embodiment 1 of the present invention;
FIG.6 shows the amount of reduction in retransmission delay according to Embodiment 1 of the present invention;
FIG.7 is a block diagram showing a configuration of the radio network controlling apparatus according to Embodiment 2 of the present invention;
FIG.8 is a sequence diagram showing the RRC connection procedure according to Embodiment 2 of the present invention; and
FIG.9 is a sequence diagram showing the RRC connection procedure according to Embodiment 2 of the present invention.

Best Mode for Carrying Out the Invention

Hereinafter, embodiments of the present invention will be described with reference to the accompanying drawings.

(Embodiment 1)

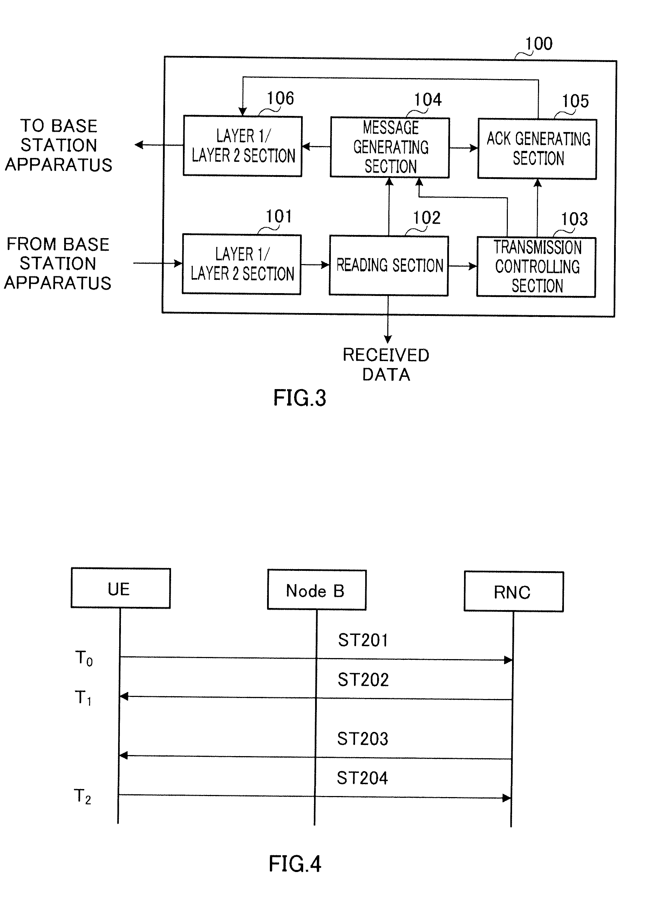

FIG.3 is a block diagram showing a configuration of radio network controlling apparatus 100 according to Embodiment 1 of the present invention.

Layer 1/layer 2 section 101 receives a received signal that is transmitted from a base station apparatus and that includes an RRC connection request message requesting an RRC connection setup, processes the signal in layer 1 and layer 2 and outputs the signal to reading section 102.

Reading section 102 reads various data included in the received signal inputted from layer 1/layer 2 section 101 and outputs the data as received data. Furhter, reading section 102 reads the RRC connection request message included in the received signal inputted from layer 1/layer 2 section 101. Furthermore, when the RRC connection request message is accurately read without errors, reading section 102 outputs information showing that the message is read accurately, to transmission controlling section 103 and message generating section 104.

When receiving an input of information showing that the message is read accurately, from reading section 102, transmission controlling section 103 controls timings of an RRC connection setup message that is outputted from message generating section 104 and that sets up RCC connection and the ACK message outputted from ACK generating section 105. To be more specific, transmission controlling section 103 controls ACK generating section 105 such that theACKmessage generated in ACK generating section 105 is transmitted first, and controls message generating section 104 such that the RRC connection setup message generated in message generating section 104 is transmitted following the ACK message.

When receiving an input of information showing that the message is read accurately, from reading section 102, message generating section 104 generates an RRC connection setup message including information elements (connection information) for setting up RRC connection. Then, message generating section 104 outputs the generated RRC connection setup message to layer 1/layer 2 section 106, according to the control by transmission controlling section 103. Further, message generating section 104 outputs part of information elements for setting up RRC connection, to ACK generating section 105. Information elements outputted from message generating section 104 to ACK generating section 105 are in size accommodated in one block of the minimum transmission unit.

When receiving an input of information element from message generating section 104, ACK generating section 105 generates anACKmessage of one block including the inputted information element. Then, ACK generating section 105 outputs the generated ACK message to layer 1/layer 2 section 106, according to the control by transmission controlling section 103.

Layer 1/layer 2 section 106 processes the RRC connection setup message inputted frommessage generating section 104 in layer 1 and layer 2, and transmits the result to the base station apparatus. Further, layer 1/layer 2 section 106 processes the ACK message inputted from ACK generating section 105 in layer 1 and layer 2, and transmits the result to the base station apparatus.

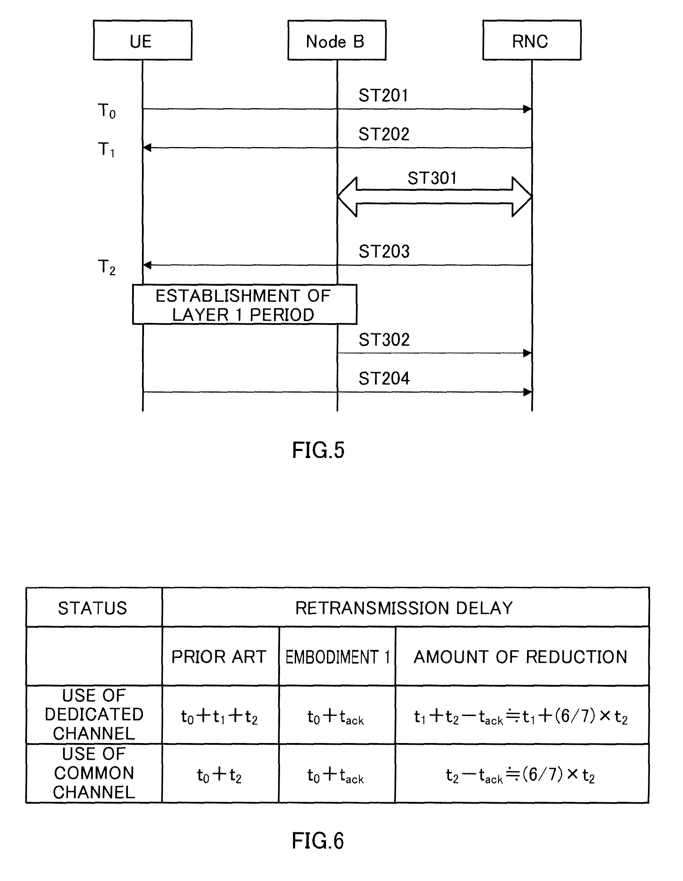

Next, the RRC connection procedure will be described with reference to FIGs.4 and 5. FIG.4 is a sequence diagram showing the RRC connection procedure when the communication terminal apparatus uses the common channel in the transport channel. FIG.5 is a sequence diagram showing the RRC connection procedure when the communication terminal apparatus uses the dedicated channel in the transport channel.

First, the RRC connection procedure will be described in the case where the communication terminal apparatus uses the common channel in the transport channel. The communication terminal apparatus transmits an RRC connection request message and starts the RRC connection setup procedure (step ST201). The RRC connection request message includes information elements "Initial UE-Identity," "Establsihment cause," "protocol Error Indicator" and "Measurement Result On RACH." Further, the data size of the RRC connection request message is one block (168 bits).

Radio network controlling apparatus 100 that receives the RRC connection request message reads the RRC connection request message in reading section 102. When reading section 102 accurately reads the RRC connection request message without errors, ACK generating section 105 generates an ACK message. The ACK message generated in ACK generating section 105 includes "Initial UE-Identity" which is conventionally returned in the RRC connection setup message. Further, in addition to "Initial UE-Identity," the ACK message includes information elements randomly selected from "RNTI," "RRC State Indicator, " "Radio Bearer IE," "Transport Channel IE" and "Physical Channel IE." However, ACK generating section 105 selects information elements such that the data size of the ACK message is equal to less than one block.

Then, radio network controlling apparatus 100 transmits the ACK message generated by ACK generating section 105 to the communication terminal apparatus through the base station apparatus (step ST202). Next, radio network controlling apparatus 100 returns an RRC connection setup message to the communication terminal apparatus (step ST203). The RRC connection setup message includes "Initial UE-Identity." Further, in addition to "Initial UE-Identity," the RRC connection setup message includes information elements that are not included in the ACK message, among "RNTI," "RRC State Indicator," "Radio Bearer IE, " "Transport Channel IE, " and "Physical Channel IE." As a result, the data size of the RRC connection setup message can be made six blocks, which is smaller than in the conventional method.

Next, the communication terminal apparatus judges that radio network controlling apparatus 100 accurately reads the RRC connection request message, by receiving the ACK message in a predetermined time. The ACK message is a dedicated message for reporting successful reception, so that the communication terminal apparatus can judge successful reception by receiving the ACK message. On the other hand, when an ACK message is not received in a predetermined time, the communication terminal apparatus judges that radio network controlling apparatus 100 does not accurately read the RRC connection request message and retransmits the RRC connection request message.

Next, after receiving the RRC connection setup message, the communication terminal apparatus sets up layer 1 and layer 2 using parameters included in the RRC connection setup message and establishes DCCH. According to the command of the network, when using the common channel of the transport channel, the communication terminal apparatus enters the CELL_FACH state in RRC connected mode. Next, after the communication terminal apparatus enters in RRC Connected Mode, the communication terminal apparatus transmits the RRC connection setup complete message in AM (Acknowledged Mode) through DCCH to the radio network controlling apparatus (step ST204), and finishes the RRC connection setup procedure. In this way, the communication terminal sets up RRC connection using information elements included in a data size of seven blocks, including one block of the ACK message and six blocks of the RRC connection setup message.

Next, the RRC connection procedure will be described with reference to FIG.5 when the communication terminal apparatus uses a dedicated channel of the transport channel. Further, in FIG.5, the same procedure as in FIG.4 will be assigned the same reference numerals and overlapping descriptions will be omitted.

After receiving an RRC connection request message, the radio network controlling apparatus transmits a radio link setup request to establish a dedicated channel between the radio network controlling apparatus and the base station apparatus, and the base station apparatus returns a radio link setup response (step ST301). After receiving the RRC connection setup message, the terminal sets up layer 1 and layer 2 using parameters included in the RRC connection setup message and establishes DCCH. Then, synchronization of layer 1 is established between the terminal and the base station apparatus. Next, the base station apparatus transmits a radio link restore indication to the radio network controlling apparatus (step ST302).

FIG.6 compares the effects of reduction in retransmission delay of the prior art and Embodiment 1 in the RRC connection procedure in the case where the communication terminal apparatus uses the common channel in the transport channel and the RRC connection procedure in the case where the communication terminal apparatus uses a dedicated channel in the transport channel.

When the common channel is used, conventional retransmission delay is the sum of transmission time t0 of the RRC connection request message and transmission time t2 of the RRC connection setup message (t0 + t2). Further, retransmission delay according to Embodiment 1 is the sum of transmission time t0 and transmission time tack of the ACK message (t0 + $t_{ack}$). As a result, the amount of reduction in retransmission delay according to Embodiment 1 is (t2 - $t_{ack}$), so that it is possible to reduce transmission time t2 of the RRC connection setup message to almost the one seventh of the prior art.

Further, when a dedicated channel is used, conventional retransmission delay is the sum of transmission time t0 of the RRC connection request message, transmission time t1 of the required time for the radio link setup procedure and transmission time t2 of the RRC connection setup message (t0 + t1 + t2). On the other hand, retransmission delay according to Embodiment 1 is the sum of transmission time t0 of the RCC connection request message and transmission time $t_{ack}$ of the ACK message (t0 + $t_{ack}$). As a result, the amount of reduction in retransmission delay according to Embodiment 1 is (t1 + t2 - $t_{ack}$), so that it is possible to eliminate required time t1 in the radio link setup and reduce transmission time t2 of the RRC connection setup message to the one seventh of the prior art.

FIG.6 shows the amount of reduction in retransmission delay quantitatively. In UMTS, T300 is set with only values defined in the table, and so, in UMTS, reduction values are not values shown in FIG.6, but the difference in values of T300 set upon transmission of an ACK message is the amount of reduction in retransmission delay. That is, the amount of reduction $\Delta t1$ in retransmission delay in UMTS can be determined by equation 2.

[2]

$$\Delta t1 = T300old - T300new \ (ms)…(Equation \ 2)$$

where T300old is the value of T300 set by the prior art and T300new is the value of T300 set by Embodiment 1.

Further, the probability that the RRC connection request message cannot be read accurately, that is, the probability that retransmission is carried out, is specified in the 3GPP specification TS25.104 as the receiving capability of the PRACH message of the base station (where BLER is between $10^{-1}$ to $10^{-2}$). That is, the size of the RRC connection request message is one block, and so the probability of message reception failure is the same as BLER.

Further, conventional average time t between transmission of the RRC connection request message and reception of the RRC connection setup message can be determined by equation 3.

[3]

$$T = (1 - P) \times (T2 - T0) + ((T2 - T0) + T300old) \times P \ldots (Equation\ 3)$$

where T0 is the transmission start time for the RRC connection request message, T2 is the receiving completion time for the RRC connection setup message and P is the probability that the RRC connection request message cannot be read accurately.

On the other hand, average time t' in Embodiment 1 between transmission of the RRC connection request message and reception of the RRC connection setup message can be determined by equation 4.

[4]

$$t' = (1 - P) \times (T2 - T0) + ((T2 - T0) + T300new) \times P \ldots (Equation\ 4)$$

where T0 is the transmission start time for the RRC connection request message, T2 is the receiving completion time for the RRC connection setup message and P is the probability that the RRC connection request message cannot be read accurately.

As a result, according to equation 3 and equation 4, the amount of reduction $\Delta t2$ in the average time between transmission of the RRC connection request message and reception of the RRC connection setup message according to Embodiment 1 can be determined by equation 5.

[5]

$$\Delta t2 = t - t' = (T300old - T300new) \times P \ldots (Equation\ 5)$$

where t is the conventional average time between transmission of the RRC connection request message and reception of the RRC connection setup message, t' is the average time between transmission of the RRC connection request message and reception of the RRC connection setup message according to Embodiment 1, T300old is the value of T300 set in the prior art, T300new is the value of T300 set in Embodiment 1 and P is the probability that the RRC connection request message cannot be read accurately.

In this way, according to Embodiment 1, it is possible to reduce the connection time for RRC by $\Delta t2$ on average compared to the prior art.

Further, according to the 3GPP standard after release 5, Pre-configuration methods, which are referred to as "Default configuration" and "Predefined configuration," are introduced in the RRC connection procedure. That is, radio bearer information (RB IE) in the RRC connection setup message is reported in advance to a communication terminal apparatus using default configuration and system report information (Predefined configuration SIB 16). In this case, the RRC connection setup message includes indices alone matching these information elements, instead of the component of RB/TrCH IE. In this way, it is possible to reduce the size of a message to transmit and the transmission time for a message.

By the way, inUMTS, the radio network controlling apparatus and communication terminal apparatus supporting standards of different releases are likely to be provided simultaneously. For example, a radio network controlling apparatus that does not have the configuration of Embodiment 1, that is, a radio network controlling apparatus that does not have a function of generating and transmitting an ACK message, does not transmit a message showing successful reception of an RCC connection request message. In this case, the communication terminal apparatus that has a function not to carry out retransmission when receiving anACKmessage, judges that the radio network controlling apparatus does not accurately read RRC connection request, and retransmits the RRC connection request message. Problems caused by mismatch in standard versions between the radio network controlling apparatus and communication terminal apparatus can be prevented by reporting the standard version of the radio network controlling apparatus and the setting value of T300 supporting each version, to the communication terminal apparatus using system report information.

In this way, according to Embodiment 1, by transmitting an ACK message prior to an RRC connection setup message, the communication terminal apparatus can receive the ACK message at an early timing before receiving the RRC connection setup message, so that it is possible to decrease the value of T300, set a shorter retransmission time interval, and reduce delay caused by retransmission. Further, according to Embodiment 1, by providing in an ACK message, part of information elements that are used when the RRC connection procedure is executed in the communication terminal apparatus, the amount of information elements to be transmitted is the same as in the prior art, so that it is possible to reduce overall transmission time increase in the RRC connection procedure caused by transmission of the ACK message. Further, by forming an ACK message with the minimum transmission unit of one block, the ACK message can be transmitted in a shorter time and is generated at ease, so that it is possible to transmit the ACK message at an early stage.

Furthermore, although the size of an ACK message is one block and the size of the RRC connection message is six blocks in Embodiment 1, this embodiment is not limited to this, and it is possible to set the size of the ACK message random other than one block and the size of the RRC connection setup message random other than six blocks.

(Embodiment 2)

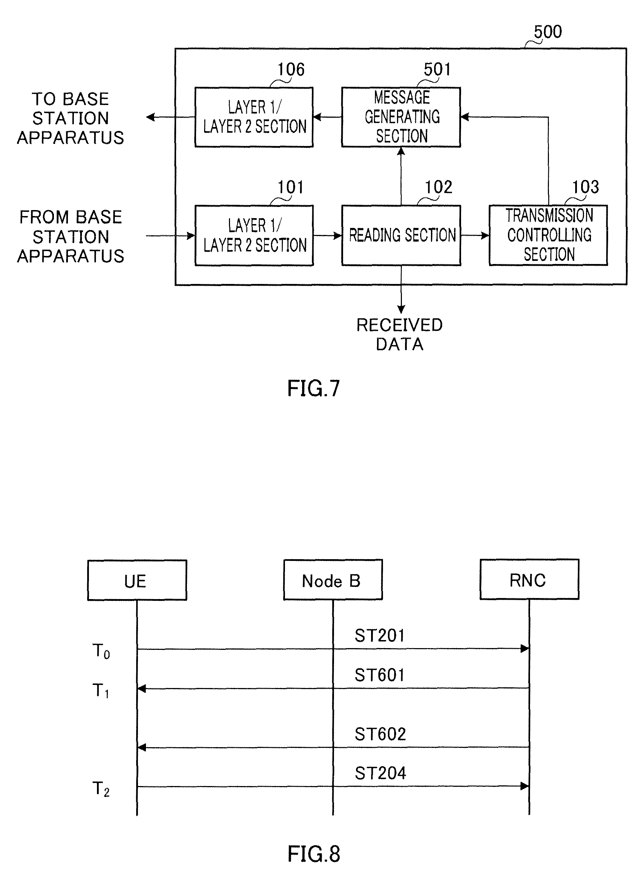

FIG.7 is a block diagram showing the configuration of the radio network controlling apparatus according to Embodiment 2 of the present invention.

Radio network controlling apparatus 500 according to Embodiment 2 differs from radio network controlling apparatus 100 according to Embodiment 1 shown in FIG.3 in removing ACK generating section 105 and providing message generating section 501 instead of message generating section 104 as shown in FIG. 7. Further, in FIG.7, the same configuration as in FIG.3 will be assigned the same reference numerals and overlapping descriptions will be omitted.

Reading section 102 reads various data included in received signal inputted from layer 1/layer 2 section 101 and outputs the data as received data. Further, reading section 102 reads the RRC connection request message included in the received signal inputted from layer 1/layer 2 section 101. Furthermore, when the RRC connection request message is accurately read without errors, reading section 102 outputs information showing that the message is read accurately, to transmission controlling section 103 and message generating section 501.

When receiving an input of information showing that the message is read accurately, from reading section 102, transmission controlling section 103 controls timings of the RRC connection setup message outputted from message generating section 501.

When receiving an input of information showing that the message is read accurately, from reading section 102, message generating section 501 generates a plurality of RRC connection setup messages for setting up RRC connection. Further, message generating section 104 outputs a plurality of generated RRC connection setup messages to layer 1/layer 2 section 106 according to the control by transmission controlling section 103. Message generating section 501 generates the RRC connection setup message such that each RRC connection setup message includes different information elements. Further, the number of blocks for each RRC connection message may be determined random.

Layer 1/layer 2 section 106 processes the RRC connection setup message inputted from message generating section 501 in layer 1 and layer 2, and transmits the result to the base station apparatus.

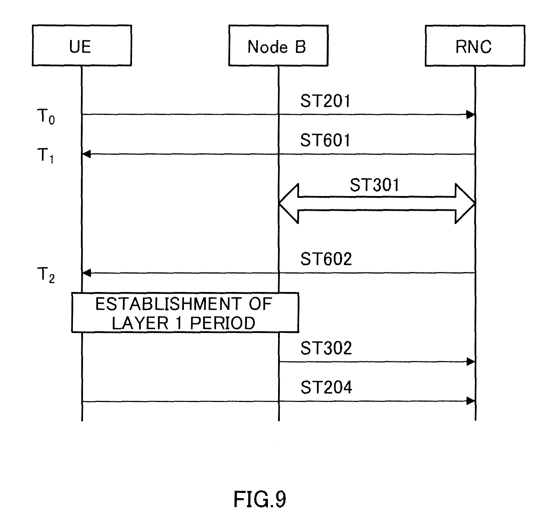

Next, the RRC connection procedure will be described with reference to FIG.8 and FIG.9. FIG.8 is a sequence diagram showing the RRC connection procedure in the case where the communication terminal apparatus uses the common channel in the transport channel. FIG.9 is a sequence diagram showing the RRC procedure in the case where the communication terminal apparatus uses a dedicated channel in the transport channel. Further, in FIG.8 and FIG.9, the same flows as in FIG.4 and FIG.5 will be assigned the same reference numerals and overlapping descriptions will be omitted.

The RRC connection procedure will be described first in the case where the common channel is used. Radio network controlling apparatus 500 transmits an RRC connection setup message generated by message generating section 501, to the communication terminal apparatus through the base station apparatus (step ST601). The RRC connection setup message transmitted in step ST601 includes "InitialUE-Identity." Further, in addition to "Initial UE-Identity," the RRC connection setup message transmitted in step ST601 includes part of information elements selected randomly from "RNTI," "RRC State Indicator," "Radio Bearer IE," "Transport Channel IE," and "Physical Channel IE." Furthermore, the RRC connection setup message transmitted in step ST601 includes "RRC connection request rx OK flag" which shows that the RRC connection setup message is used as a message for reporting successful reception.

Next, when receiving an RRC connection setup message including an RRC connection request rx OK flag in a predetermined time, the communication terminal apparatus 500 judges that the RRC connection request message is read accurately in radio network controlling apparatus 500. On the other hand, when the communication terminal apparatus does not receive an RRC connection setup message including an RRC connection request rx OK flag in a predetermined time, the communication terminal apparatus judges that the RRC connection request message is not read accurately in radio network controlling apparatus 500 and retransmits the RRC connection request message.

Next, radio network controlling apparatus 500 transmits an RRC connection setup message generated by message generating section 501 to the communication terminal apparatus through the base station apparatus (step ST602). The RRC connection setup message transmitted in step ST602 includes "Initial UE-Identity." Furhter, in addition to "Initial UE-Identity," the RRC connection setup message transmitted in step ST602 includes other information elements that are not included in the RRC connection setup message transmitted in step ST601. Further, in the RRC procedure using a dedicated channel in FIG.9, step ST601 and step ST602 use the same RRC connection procedure using the common channel and overlapping descriptions will be omitted. This embodiment is the same as above Embodiment 1 in preventing problems caused by mismatch in standard versions between the radio network controlling apparatus and communication terminal apparatus by reporting the standard version of the radio network controlling apparatus, to the communication terminal apparatus using system reporting information. Furthermore, the amount of reduction Δt1 in retransmission delay and the amount of reduction Δt2 in the average time between transmission of the RRC connection request message and reception of the RRC connection setup message are the same as in above Embodiment 1.

In this way, according to Embodiment 2, by transmitting a plurality of RRC connection messages and reporting successful reception in the RRC connection setup message transmitted first, the communication terminal apparatus can learn successful reception at the reception timing of the first RRC connection setup message, so that it is possible to decrease the value of T300, set a short retransmission time interval and reduce delay caused by retransmission. Further, according to Embodiment 2, by reporting successful reception using part of an RRC connection setup messages, the amount of transmission of information elements is the same as in the prior art, so that it is possible to reduce overall transmission time increase in the RRC connection procedure. Further, according to embodiment 2, the message for reporting successful reception is the same as the RRC connection message, so that changes to the 3GPP protocol standard can be minimized.

Furthermore, although a case has been described with Embodiment 2 where the RRC connection setup messages are separately transmitted two times, Embodiment 2 is not limited to this and the messages may be separately transmitted three times or more. In this case, by providing different information elements in each RRC Connection Setup message, it is possible to set the amount of transmission of information elements the same as in the prior art.

Industrial Applicability

The radio network controlling apparatus, communication system and communication method according to the present invention are suitable for executing the RRC connection procedure.

**Claims**

1. A radio network controlling apparatus comprising:

   a receiving section that receives a connection request message for requesting to set up radio resource control connection for radio communication;
   a reading section that reads the received connection request message;
   a message generating section that generates a message showing successful reception when the connection request message is read accurately and that generates a connection setup message for setting up the radio resource control connection; and
   a transmission controlling section that transmits the connection setup message after transmitting the message showing successful reception.

2. The radio network controlling apparatus according to claim 1, wherein the message generating section divides connection information comprising information for setting up the radio resource control connection and generates the message that includes the divided connection information and shows successful reception and the connection setup message.

3. The radio network controlling apparatus according to claim 1, wherein the message generating section generates the message showing successful reception in a minimum transmission unit of one block.

4. The radio network controlling apparatus according to claim 1, wherein the message generating section generates the message showing successful reception and the connection setup message as the same message.

5. A communication system that executes a procedure of setting up radio resource control connection in radio communication at a communication terminal apparatus and a radio network controlling apparatus, wherein:

when a message showing successful reception of a connection request message for requesting to set up the transmitted radio resource control connection is not received, the communication terminal apparatus retransmits the connection request message and sets radio resource control connection based on connection information, included in a received connection setup message, for setting up radio resource control connection; and
when the received connection request message is read accurately, the radio network controlling apparatus transmits the message showing successful reception and a connection setup message including the connection information after transmitting the message showing successful reception.

6. A communication method for executing a procedure of setting up radio resource control connection for radio communication at a communication terminal apparatus and a radio network controlling apparatus, the method comprising:

at the communication terminal apparatus, transmitting a connection request message for requesting to setting the radio resource control connection;
receiving the connection request message at the radio network controlling apparatus;
when the received connection request message is read accurately, generating a message showing successful reception and a connection setup message including connection information for setting up the radio resource control connection;
transmitting the connection setup message after the radio network controlling apparatus transmits the message showing successful reception; and
when the connection setup message is received at the communication terminal apparatus, setting up radio resource control connection based on the connection information, and, when the message showing successful reception is not received at the communication terminal apparatus in a predetermined time, retransmitting the connection request message.

PRIOR ART

FIG.1

| UE | Node B | RNC |
|---|---|---|

IDLE MODE

ST21

ST31

ST32

ST22

ESTABLISHMENT OF LAYER 1 PERIOD

ST33

RRC CONNECTION MODE

ST23

PRIOR ART

FIG.2

FIG.3

FIG.4

FIG.5

| STATUS | RETRANSMISSION DELAY | | |
|---|---|---|---|
| | PRIOR ART | EMBODIMENT 1 | AMOUNT OF REDUCTION |
| USE OF DEDICATED CHANNEL | $t_0 + t_1 + t_2$ | $t_0 + t_{ack}$ | $t_1 + t_2 - t_{ack} \fallingdotseq t_1 + (6/7) \times t_2$ |
| USE OF COMMON CHANNEL | $t_0 + t_2$ | $t_0 + t_{ack}$ | $t_2 - t_{ack} \fallingdotseq (6/7) \times t_2$ |

FIG.6

500

106　　　　　　　　501

| | | |
|---|---|---|
| TO BASE STATION APPARATUS | LAYER 1/ LAYER 2 SECTION | MESSAGE GENERATING SECTION |

101　　　　　　102　　　　　103

| | | | |
|---|---|---|---|
| FROM BASE STATION APPARATUS | LAYER 1/ LAYER 2 SECTION | READING SECTION | TRANSMISSION CONTROLLING SECTION |

RECEIVED
DATA

FIG.7

| UE | Node B | RNC |
|---|---|---|

$T_0$　——————— ST201 ———————→

$T_1$　←——————— ST601 ———————

←——————— ST602 ———————

$T_2$　——————— ST204 ———————→

FIG.8

FIG.9

## INTERNATIONAL SEARCH REPORT

| | International application No. |
|---|---|
| | PCT/JP2005/015225 |

**A. CLASSIFICATION OF SUBJECT MATTER**
*H04Q7/38*(2006.01)

According to International Patent Classification (IPC) or to both national classification and IPC

**B. FIELDS SEARCHED**

Minimum documentation searched (classification system followed by classification symbols)
*H04Q7/00-7/38*(2006.01)

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-523989 A (Qualcomm Inc.), 30 July, 2002 (30.07.02), Fig. 2 & WO 2000/011879 A1    & US 2002/0065082 A1 & EP 1106028 A | 1-6 |

☐ Further documents are listed in the continuation of Box C.   ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 21 November, 2005 (21.11.05) | Date of mailing of the international search report 29 November, 2005 (29.11.05) |
|---|---|
| Name and mailing address of the ISA/ Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Signaling Enhancement for Circuit-Switched (CS) and Packet-Switched (PS) Connections; Analysis and Recommendations. *3GPP TR 25.815 V.0.2.1*

- **CHRIS JOHOSON ; CHRIS HAINES.** Evaluating and Refining Call Setup Delay. *5th international Conference on 3G Mobile Communication Technologies,* 18 October 2004